# EUROPÄISCHE PATENTSCHRIFT

(11) **EP 3 149 366 B1**
(45) Veröffentlichungstag und Bekanntmachung des Hinweises auf die Patenterteilung: **17.10.2018**
(21) Anmeldenummer: 15723952.6
(22) Anmeldetag: 20.05.2015
(51) Int. Cl.: F16J 15/3236

(54) **DICHT- ODER ABSTREIFRING**
SEALING OR SCRAPER RING
BAGUE D'ÉTANCHÉITÉ OU SEGMENT RACLEUR

(30) Priorität: 26.05.2014 DE 102014007617
(43) Veröffentlichungstag der Anmeldung: 05.04.2017
(73) Patentinhaber: Carl Freudenberg KG, 69469 Weinheim (DE)
(72) Erfinder: KINSCH, Patrick, 34590 Wabern (DE); STEITZ, Simone, 35085 Ebsdorfergrund (DE); STRÖHLE, Achim, 73340 Amstetten (DE); SMIETANA, Gerhard, 34626 Neukirchen (DE); JÄCKEL, Jürgen, 34637 Schrecksbach (DE); GRÖSCH, Michael, 36304 Alsfeld (DE); KÜRSCHNER, Michael, 34613 Schwalmstadt (DE)
(86) Internationale Anmeldenummer: PCT/EP2015/061119
(87) Internationale Veröffentlichungsnummer: WO 2015/181022

(56) Entgegenhaltungen:
- EP-A1- 1 818 579
- EP-A1- 1 959 172
- CN-A- 103 322 203
- DE-A1-102009 028 139
- DE-A1-102012 218 358
- US-A- 3 215 441
- US-A- 3 920 254

## Beschreibung

### Technisches Gebiet

Die Erfindung betrifft eine Dichtungs- oder Abstreiferanordnung, die einen Dicht- oder Abstreifring umfasst, der in radialer Richtung einerseits zwei mit axialem Abstand benachbart zueinander angeordnete, statisch beanspruchte Dichtkanten und eine in dem axialen Abstand angeordnete Vertiefung umfasst sowie in radialer Richtung andererseits zumindest eine Dicht- oder Abstreiflippe und in axialer Richtung beiderseits auf den Stirnseiten angeordnete, ringförmig in sich geschlossen ausgebildete Dichtwulste und ein erstes Maschinenelement, das einen nutförmig ausgebildeten Einbauraum für den Dicht- oder Abstreifring umfasst, wobei der Dicht- oder Abstreifring im Einbauraum angeordnet ist und ein abzudichtendes zweites Maschinenelement mit seiner Dicht- oder Abstreiflippe unter elastischer Vorspannung anliegend berührt, wobei die beiden Maschinenelemente einander im Wesentlichen konzentrisch zugeordnet sind und wobei der Dicht- oder Abstreifring während seiner bestimmungsgemäßen Verwendung in radialer und axialer Richtung elastisch vorgespannt ist.

### Stand der Technik

Eine solche Dichtungs- oder Abstreiferanordnung ist allgemein bekannt, wobei der Einbauraum für den Dicht- oder Abstreifring in einem ersten Maschinenelement eine größere Ausdehnung in axialer Richtung aufweist, als der Dicht- oder Abstreifring. Dadurch ist der Dicht- oder Abstreifring während der bestimmungsgemäßen Verwendung der Dichtungs- oder Abstreiferanordnung in axialer Richtung innerhalb des Einbauraums beweglich, so dass Verunreinigungen aus der Umgebung des Einbauraums in den Einbauraum und damit zu den statisch beanspruchten Dichtkanten gelangen können. In einem solchen Fall würden die statisch beanspruchten Dichtkanten im Laufe der Gebrauchsdauer beschädigt, und die Funktion des Dicht- oder Abstreifrings würde nachteilig beeinflusst.

Eine Dichtungs- oder Abstreiferanordnung, die einen Dicht- oder Abstreifring umfasst, ist aus der EP 1 818 579 A1 bekannt. Die Abstreiflippe berührt die abzustreifende Oberfläche eines abzudichtenden Maschinenelements unter elastischer radialer Vorspannung anliegend. Der Dicht- oder Abstreifring ist in einem radial in Richtung des abzudichtenden Maschinenelements offenen Einbauraum eines zweiten Maschinenelements schwimmend angeordnet. Nach einer vorteilhaften Ausgestaltung ist es demnach vorgesehen, dass der Dicht- oder Abstreifring in seinem Einbauraum bevorzugt in axialer und radialer Richtung schwimmend angeordnet ist.

Eine weitere Dichtungs- oder Abstreiferanordnung ist aus der US 3,920,254 bekannt. Der Dicht- oder Abstreifring besteht aus einem elastomeren Werkstoff und ist, im Längsschnitt betrachtet, im Wesentlichen V-förmig ausgebildet. In radialer Richtung einerseits sind zwei mit einem axialen Abstand benachbart zueinander angeordnete, statisch beanspruchte Dichtkanten vorgesehen, die die V-förmige Vertiefung in axialer Richtung begrenzen. In radialer Richtung andererseits, axial zwischen den statisch beanspruchten Dichtkanten, ist eine Dicht- oder Abstreiflippe vorgesehen.

### Darstellung der Erfindung

Der Erfindung liegt die Aufgabe zu Grunde, eine Dichtungs- oder Abstreiferanordnung der eingangs genannten Art derart weiterzuentwickeln, dass die Dichtungs- oder Abstreiferanordnung einen ausreichend großen Expansionsraum aufweist, der derart bemessen ist, dass er während der bestimmungsgemäßen Verwendung der Dichtungs- oder Abstreiferanordnung keinesfalls vollständig mit dem Werkstoff des Dicht- oder Abstreifrings ausgefüllt ist, so dass der Dicht- oder Abstreifring stets in radialer Richtung beweglich innerhalb des Einbauraums angeordnet ist, dass die Montage des Dicht- oder Abstreifrings besonders einfach und rasch möglich ist, dass die Gefahr von Montagefehlern auf ein Minimum begrenzt ist, dass Verunreinigungen von den statisch beanspruchten Dichtkanten zuverlässig fern gehalten werden und dass der Dicht- oder Abstreifring sowie die Dichtungs- oder Abstreiferanordnung gleichbleibend gute Gebrauchseigenschaften während einer langen Gebrauchsdauer aufweisen.

Diese Aufgabe wird erfindungsgemäß bei einer Dichtungs- oder Abstreiferanordnung durch die Merkmale von Anspruch 1 gelöst. Auf vorteilhafte Ausgestaltungen nehmen die darauf rückbezogenen Unteransprüche Bezug.

Zur Lösung der Aufgabe ist eine Dichtungs- oder Abstreiferanordnung vorgesehen, bei der der Einbauraum einen Nutgrund aufweist, der in axialer Richtung bogenförmig ausgebildet ist und bei der der Dicht- oder Abstreifring zumindest in axialer Richtung selbstzentrierend im Einbauraum angeordnet ist.

Die Dicht- oder Abstreiflippe kann dynamisch oder statisch beansprucht sein. Ein solcher Dicht- oder Abstreifring kann zur Abdichtung als dynamische Kolben- oder Stangendichtung zur Anwendung gelangen. Insbesondere die Verwendung in Maschinen, wie zum Beispiel Bohrmaschinen, Bohrhämmern oder Hydraulik-/Pneumatik-Werkzeugen ist vorteilhaft, weil bei der Arbeit mit solchen Maschinen häufig feine Stäube entstehen, die bisher oftmals zu Funktionsbeeinträchtigungen der Maschine nach bereits relativ kurzer Gebrauchsdauer geführt haben.

Die ringförmig in sich geschlossen ausgebildeten Dichtwulste dichten bei eingebautem Dicht- oder Abstreifring die statisch beanspruchten Dichtkanten gegenüber der Umgebung ab. Die statisch beanspruchten Dichtkanten sind deshalb vor eindringenden Verunreinigungen wirksam geschützt, Verschleiß an den Dichtkanten ist deshalb minimiert und die Dichtkanten dichten folglich während der gesamten Gebrauchsdauer des Dicht- oder Abstreifrings gleichbleibend gut ab.
Auch die Funktion des Dicht- oder Abstreifrings wird durch den Schutz vor eindringenden Verunreinigungen nicht beeinträchtigt.
Wenn die Dicht- oder Abstreiflippe statisch beansprucht ist, gelangt der Dicht- oder Abstreifring zum Beispiel anstelle eines statisch abdichtenden O-Rings zur Anwendung.

Der Einbauraum weist einen Nutgrund auf, der in axialer Richtung bogenförmig ausgebildet ist. Durch die Vermeidung scharfkantiger Begrenzungen werden gebrauchsdauerverringernde Kerbspannungen im Einbauraum vermieden. Außerdem wird durch die Bogenform des Nutgrunds das Volumen des Expansionsraums vergrößert, und eine Selbstzentrierung des Dicht- oder Abstreifrings im Einbauraum wird dadurch begünstigt.

Der Dicht- oder Abstreifring ist durch die Radien im Einbauraum und/oder eine axiale Verpressung im Einbauraum bevorzugt zumindest in axialer Richtung selbstzentrierend im Einbauraum angeordnet. Der Dicht- oder Abstreifring ist sowohl in axialer Richtung als auch in radialer Richtung selbstzentrierend im Einbauraum angeordnet. Die Montage des Dicht- oder Abstreifrings ist dadurch besonders einfach und rasch möglich. Die Gefahr von Montagefehlern ist auf ein Minimum begrenzt.

Die Dichtwulste können auf ihren einander axial abgewandten Seiten jeweils eine Begrenzungsfläche aufweisen, wobei die Begrenzungsflächen in Abhängigkeit vom jeweiligen Anwendungsfall in radialer Richtung plan oder ballig ausgebildet sind.

Die Vertiefung kann im Wesentlichen V-förmig ausgebildet sein. Die Vertiefung ist dabei derart bemessen, dass eine kompakte Verpressung des Dicht- oder Abstreifrings im eingebauten Zustand ausgeschlossen ist.
Der Werkstoff, aus dem der Dicht- oder Abstreifring besteht, beispielsweise ein gummielastischer Werkstoff, ist per Definition inkompressibel, sodass der Werkstoff des im eingebauten Zustand elastisch verformten Dicht- oder Abstreifrings in die Vertiefung ausweichen kann, um eine mechanische Überbeanspruchung des Werkstoffs zu verhindern und eine radiale Beweglichkeit des Dicht- oder Abstreifrings in seinem Einbauraum zu gewährleisten.

Die Dicht- oder Abstreiflippe kann im Wesentlichen V-förmig ausgebildet sein. In Verbindung mit der in radialer Richtung gegenüberliegenden, V-förmigen Vertiefung weist der gesamte Dicht- oder Abstreifring eine im Wesentlichen konstant Dicke auf, was in fertigungstechnischer Hinsicht von Vorteil ist. Die Gefahr von herstellungsbedingten Fehlstellen innerhalb des Dicht- oder Abstreifrings ist dadurch auf ein Minimum reduziert. Außerdem ist von Vorteil, dass durch die V-förmig ausgebildete Dicht- oder Abstreiflippe die Reibleistung des Dicht- oder Abstreifrings reduziert ist. Durch die V-Form und gegebenenfalls durch die Anbringung einer Rillierung an der Dicht- oder Abstreiflippe können mit zunehmender Gebrauchsdauer weitere Abdichtbereiche und gegebenenfalls Abstreifkanten in Kontakt mit der abzudichtenden Fläche kommen. Dadurch hat der Dicht- oder Abstreifring eine hohe Lebensdauer. Mit zunehmender Gebrauchsdauer flacht die axiale Mitte der V-förmigen Dicht- oder Abstreiflippe immer weiter ab und die axial in Richtung der jeweiligen Stirnseiten benachbarten Bereiche der Dicht- oder Abstreiflippe tragen zunehmend mehr.

Der Dicht- oder Abstreifring kann axial mittig eine gedachte Radialebene aufweisen und symmetrisch zu dieser ausgebildet sein. In fertigungstechnischer Hinsicht ist ein solcher Ring einfach und kostengünstig herstellbar.
Außerdem weist ein solcher Ring dieselben Gebrauchseigenschaften auf, unabhängig davon, ob sich das abzudichtende Maschinenelement translatorisch in die eine oder die andere axiale Richtung bewegt. Für die eingangs genannten Verwendungen ist ein solches Verhalten häufig von Vorteil.

Die Dicht- oder Abstreiflippe kann eine Ausdehnung in axialer Richtung aufweisen, die sich von der einen Stirnseite zur anderen Stirnseite erstreckt.

Die Dicht- oder Abstreiflippe kann eine Oberfläche umfassen, die eine in axialer Richtung wellenförmige Oberflächenprofilierung aufweist.
Die Oberflächenprofilierung kann dynamisch beanspruchte Dicht- und/oder Abstreifkanten umfassen. Das Dicht- und/oder Abstreifverhalten des Dicht- oder Abstreifrings kann besonders gut an die jeweiligen Gegebenheiten des Anwendungsfalles angepasst werden.

Zur Schmierung der Dicht- und/oder Abstreifkanten und/oder als Barriere kann es vorgesehen sein, dass zwischen axial benachbart zueinander angeordneten Dicht- und/oder Abstreifkanten Schmiermitteltaschen angeordnet sind. Die Schmiermitteltaschen können zum Beispiel mit einem Schmier- oder Sperrfett gefüllt sein.

Im Hinblick auf eine einfache und kostengünstige Herstellbarkeit des Dicht- oder Abstreifrings ist von Vorteil, wenn diese einstückig und materialeinheitlich ausgebildet ist. Als Werkstoffe können zum Beispiel PU, HNBR, NBR, oder FKM zur Anwendung gelangen.

Die Dichtungs- oder Abstreiferanordnung umfasst einen Dicht- oder Abstreifring, wie zuvor beschrieben. Außerdem umfasst die Dichtungs- oder Abstreiferanordnung ein erstes Maschinenelement, das einen nutförmig ausgebildeten Einbauraum für den Dicht- oder Abstreifring umfasst, wobei der Dicht- oder Abstreifring im Einbauraum angeordnet ist und ein abzudichtendes zweites Maschinenelement mit seiner Dicht- oder Abstreiflippe unter elastischer Vorspannung anliegend berührt, wobei die beiden Maschinenelemente einander im Wesentlichen konzentrisch zugeordnet sind und wobei der Dicht- oder Abstreifring während seiner bestimmungsgemäßen Verwendung in radialer und axialer Richtung elastisch vorgespannt ist.

Das erste Maschinenelement, das den nutförmig ausgebildeten und radial in Richtung des zweiten Maschinenelements offenen Einbauraum aufweist, kann zum Beispiel als Gehäuse ausgebildet sein, das zweite Maschinenelement als translatorisch hin- und herbewegliche Stange, die das Gehäuse durchdringt. Die statisch beanspruchten Dichtkanten wären in einem solchen Fall radial außenumfangsseitig am Dicht- oder Abstreifring angeordnet, die dynamisch beanspruchte Dicht- oder Abstreiflippe radial innenseitig.
Nach einer anderen Ausgestaltung besteht die Möglichkeit, dass das erste Maschinenelement durch einen Kolben gebildet ist, der translatorisch in einem hohlzylindrischen Gehäuse hin- und herbeweglich ist. In einem solchen Fall würde sich die dynamisch beanspruchte Dicht- oder Abstreiflippe an der die Gehäusebohrung begrenzenden Wandelung des Gehäuses abstützen und wäre folglich außenumfangsseitig am Dicht- oder Abstreifring angeordnet. Die statisch beanspruchten Dichtkanten wären demgegenüber radial innenumfangsseitig am Dicht- oder Abstreifring angeordnet und würden sich im Einbauraum, der im Kolben angeordnet ist, abstützen.

Die in axialer Richtung beiderseits auf den Stirnseiten des Dicht- oder Abstreifrings angeordneten, ringförmig in sich geschlossen ausgebildeten Dichtwulste stützen sich an den jeweiligen Nutflanken des Einbauraums dichtend ab. Der radial zwischen den Dichtwulsten und dem Nutgrund befindliche Raum, in dem auch die statisch beanspruchten Dichtkanten angeordnet sind, ist hermetisch gegenüber der mit Verunreinigungen beaufschlagten Umgebung abgedichtet. Neben der vorteilhaften Abdichtung der statisch beanspruchten Dichtkanten bewirken die elastisch vorgespannten Dichtwulste, dass sich der Dicht- oder Abstreifring innerhalb seines Einbauraums in axialer Richtung selbst zentriert. Dadurch, dass es während der bestimmungsgemäßen Verwendung praktisch keine Relativbewegung zwischen dem Einbauraum und dem Dicht- oder Abstreifring in axialer Richtung gibt, gibt es keinen Verschleiß
an den statisch beanspruchten Dichtkanten und/oder an der Oberfläche der Einbaunut, an der sich die statisch beanspruchten Dichtkanten abstützen. Die Montage des Dicht- oder Abstreifrings ist besonders einfach, weil sich dieser sowohl in axialer als auch in radialer Richtung selbst zentriert.

Der Nutgrund und die Vertiefung begrenzen den Expansionsraum zur Aufnahme von elastizitätsbedingt verdrängtem Werkstoff des Dicht- oder Abstreifrings. Der Expansionsraum ist derart bemessen, dass er während der bestimmungsgemäßen Verwendung der Dichtungs- oder Abstreiferanordnung keinesfalls vollständig mit dem Werkstoff des Dicht- oder Abstreifrings ausgefüllt ist. Dadurch wird erreicht, dass der Dicht- oder Abstreifring stets in radialer Richtung beweglich innerhalb des Einbauraums angeordnet ist. Exzentrizitäten der gegeneinander abzudichtenden Maschinenelemente können dadurch einfach ausgeglichen werden, ohne dass der Werkstoff, aus dem der Dicht- oder Abstreifring besteht, mechanisch überbeansprucht würde.

Stirnseitig beiderseits des Dicht- oder Abstreifrings berührt nur der jeweilige Dichtwulst der jeweiligen Stirnseite die jeweils axial benachbart zugeordnete Nutflanke des Einbauraums zur Abdichtung der statisch beanspruchten Dichtkanten dichtend anliegend. Die, bezogen auf die gesamte Stirnfläche des Dicht- oder Abstreifrings wesentlich reduzierte Kontaktfläche der Dichtwulste an den jeweiligen Nutflanken sorgt für eine geringere Reibung in diesem Bereich und dadurch für eine - trotz der Abdichtung der statisch beanspruchten Dichtkanten - radiale Beweglichkeit des Dicht- oder Abstreifrings im Einbauraum. Die, bezogen auf die jeweiligen Dichtwulste, axial zurückversetzen jeweiligen Stirnseiten begrenzen zusammen mit den Nutflanken einen Teil des Expansionsraums, wobei der elastizitätsbedingt verdrängte Werkstoff auch in diesen Teil ausweichen kann.

### Kurzbeschreibung der Zeichnung

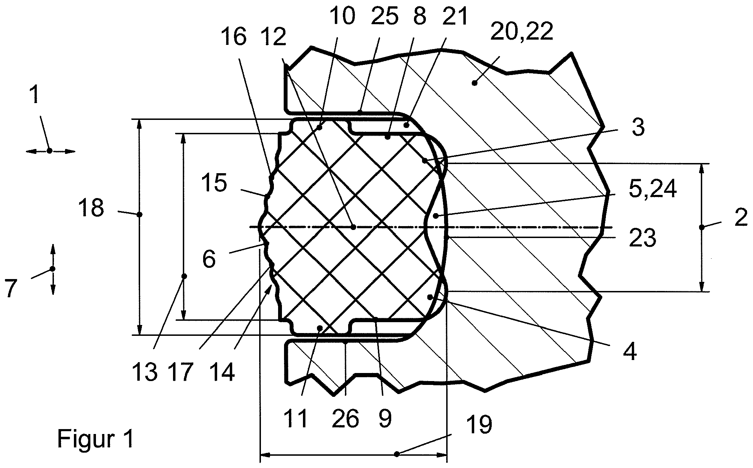

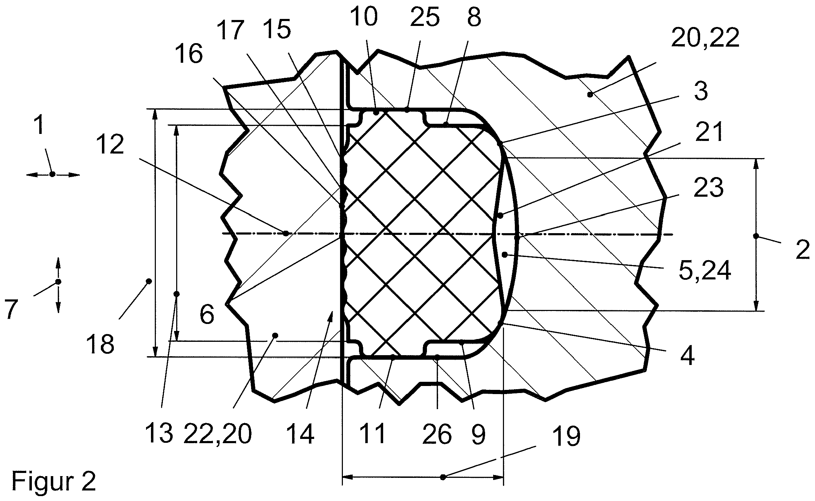

Ein Ausführungsbeispiel der erfindungsgemäßen Dichtungs- oder Abstreiferanordnung, in der der erfindungsgemäße Dicht- oder Abstreifring zur Anwendung gelangt, wird nachfolgend anhand der Figuren 1 und 2 näher beschrieben.

Diese zeigen jeweils in schematischer Darstellung:
- Figur 1: einen erfindungsgemäßen Abstreifring, der in einer erfindungsgemäßen Abstreiferanordnung angeordnet ist, wobei der Abstreifring im herstellungsbedingten Zustand im Einbauraum dargestellt ist,
- Figur 2: den Abstreifring aus Figur 1 in einer gebrauchsfertigen Abstreiferanordnung, die neben dem ersten Maschinenelement auch das abzudichtende zweite Maschinenelement umfasst.

### Ausführung der Erfindung

In Figur 1 ist ein erfindungsgemäßer Dicht- oder Abstreifring im herstellungsbedingten Zustand gezeigt. In radialer Richtung 1 außenumfangsseitig weist der Abstreifring zwei statisch beanspruchte Dichtkanten 3, 4 auf, die umlaufend und in sich geschlossen ausgebildet sind. Die Dichtkanten 3, 4 haben einen axialen Abstand 2 voneinander, und in diesem axialen Abstand 2 ist die Vertiefung 5 angeordnet. Die Vertiefung 5 ist V-förmig ausgebildet und begrenzt zusammen mit dem Nutgrund 23 des Einbauraums 21 den Expansionsraum 24, in den sich während der bestimmungsgemäßen Verwendung der Abstreiferanordnung der Werkstoff des elastisch verformten Abstreifrings, wie in Figur 2 dargestellt, verlagert. In radialer Richtung 1 innenseitig ist die Abstreiflippe 6 angeordnet, die sich von der einen Stirnseite 8 axial bis zur anderen Stirnseite 9 erstreckt. Die Abstreiflippe 6 ist ebenfalls, wie die Vertiefung 5, im Wesentlichen V-förmig ausgebildet und hat auf ihrer Oberfläche 14 eine Oberflächenprofilierung 15, die in axialer Richtung 7 wellenförmig ausgebildet ist. Durch diese Oberflächenprofilierung 15 sind Abstreifkanten 16 gebildet. Axial jeweils benachbarte Abstreifkanten 16 begrenzen mit einem Sperrfett gefüllte Schmiermitteltaschen 17. Die Schmiermitteltaschen 17 sorgen primär dafür, dass die Abstreifkanten 16 geschmiert werden und sich auf dem abzudichtenden zweiten Maschinenelement 22 reibungsarm translatorisch hin und her bewegen lassen.

Der hier dargestellte Abstreifring ist zu der gedachten Radialebene 12 symmetrisch ausgebildet. Außerdem ist der Abstreifring einstückig und materialeinheitlich ausgeführt.

In Figur 1 ist der Abstreifring im herstellungsbedingten Zustand und in den Einbauraum 21 eingelegt gezeigt. Das abzudichtende zweite Maschinenelement 22, in diesem Fall eine translatorisch hin und her bewegliche Stange, fehlt. Die Dichtwulste 10, 11 sind den jeweils axial benachbart angrenzenden Nutflanken 25, 26 mit geringem axialen Abstand benachbart zugeordnet, und die Abstreiflippe 6 weist gegenüber dem nicht gezeigten, abzudichtenden zweiten Maschinenelement 22 eine deutliche Überdeckung auf (vergl. Figur 2).

Der Nutgrund 23, an dem sich die beiden statisch beanspruchten Dichtkanten 3, 4 abstützen, ist im gezeigten Ausführungsbeispiel in axialer Richtung 7 bogenförmig ausgebildet, so dass Kerbspannungen zwischen dem Nutgrund 23 und den Nutflanken 25, 26, im Vergleich zu zum Beispiel rechteckigen Übergängen, deutlich reduziert sind.

In Figur 2 ist die Abstreiferanordnung aus Figur 1 während ihrer bestimmungsgemäßen Verwendung gezeigt. Das erste Maschinenelement 20 ist als Gehäuse ausgebildet und umschließt das als hin und her bewegliche Stange ausgebildete, abzudichtende zweite Maschinenelement 22 außenumfangsseitig.

Durch die zuvor beschriebene Überdeckung wird der Abstreifring in radialer 1 und axialer Richtung 7 elastisch verformt und ist dadurch in radialer 1 und axialer Richtung 7 elastisch vorgespannt innerhalb des Einbauraums 21 angeordnet. Die Zentrierung des Abstreifrings in axialer und radialer Richtung erfolgt selbsttätig während der Montage. Ein Teil der Vertiefung 5 bleibt stets erhalten, so dass sich der Abstreifring auch während der bestimmungsgemäßen Verwendung der Abstreiferanordnung in radialer Richtung bewegen kann; eine kompakte Verpressung des Abstreifrings gibt es folglich nicht.

In axialer Richtung liegen die Dichtwulste 10,11 dichtend an den jeweiligen Nutflanken 25,26 an, so dass der radial außerhalb der Dichtwulste 10,11 befindliche Raum, in dem auch die statisch beanspruchten Dichtkanten 3,4 angeordnet sind, hermetisch gegenüber der Umgebung abgeschlossen ist. Verunreinigungen können dadurch in diesen Raum nicht eindringen. Eine Beschädigung / Zerstörung der statisch beanspruchten Dichtkanten 3,4 ist deshalb praktisch ausgeschlossen, ebenso, wie eine Beeinträchtigung von deren Funktion.

Durch die Vorspannung des Abstreifrings in radialer 1 und axialer Richtung 7 wird dieser innerhalb seines Einbauraums 21 selbsttätig zentriert.

Das erste Maschinenelement 20 braucht nicht, wie zuvor beschrieben, ein Gehäuse zu sein, das eine als zweites Maschinenelement 22 ausgebildete Stange außenumfangsseitig umschließt. Das erste Maschinenelement 20 kann als Kolben ausgebildet sein, der einen radial nach außen offenen Einbauraum aufweist, in dem der Abstreifring angeordnet ist. Das zweite abzudichtende Maschinenelement 22 wäre dann ein hohlzylindrisches Gehäuse, an dessen Innenwandung sich die dynamisch beanspruchte Abstreiflippe 6 abstützt.

Generell besteht auch die Möglichkeit, dass der Abstreifring als Dichtring ausgebildet ist und die Abstreiferanordnung als Dichtungsanordnung.

## Patentansprüche

1. Dichtungs- oder Abstreiferanordnung, umfassend einen Dicht- oder Abstreifring, der in radialer Richtung (1) einerseits zwei mit axialem Abstand (2) benachbart zueinander angeordnete, statisch beanspruchte Dichtkanten (3, 4) und eine in dem axialen Abstand (2) angeordnete Vertiefung (5) umfasst sowie in radialer Richtung (1) andererseits zumindest eine Dicht- oder Abstreiflippe (6) und in axialer Richtung (7) beiderseits auf den Stirnseiten (8, 9) angeordnete, ringförmig in sich geschlossen ausgebildete Dichtwulste (10, 11) und ein erstes Maschinenelement (20), das einen nutförmig ausgebildeten Einbauraum (21) für den Dicht- oder Abstreifring umfasst, wobei der Dicht- oder Abstreifring im Einbauraum (21) angeordnet ist und ein abzudichtendes zweites Maschinenelement (22) mit seiner Dicht- oder Abstreiflippe (6) unter elastischer Vorspannung anliegend berührt, wobei die beiden Maschinenelemente (20, 22) einander im Wesentlichen konzentrisch zugeordnet sind und wobei der Dicht- oder Abstreifring während seiner bestimmungsgemäßen Verwendung in radialer (1) und axialer Richtung (7) elastisch vorgespannt ist, **dadurch gekennzeichnet, dass** der Einbauraum (21) einen Nutgrund (23) aufweist, der in axialer Richtung (7) bogenförmig ausgebildet ist und dass der Dicht- oder Abstreifring zumindest in axialer Richtung (7) selbstzentrierend im Einbauraum (21) angeordnet ist.

2. Dichtungs- oder Abstreiferanordnung nach Anspruch 1, **dadurch gekennzeichnet, dass** der Nutgrund (23) und die Vertiefung (5) einen Expansionsraum (24) zur Aufnahme von elastizitätsbedingt verdrängtem Werkstoff des Dicht- oder Abstreifrings begrenzen.

3. Dichtungs- oder Abstreiferanordnung nach einem der Ansprüche 1 oder 2, **dadurch gekennzeichnet, dass** stirnseitig beiderseits des Dicht- oder Abstreifrings nur der jeweilige Dichtwulst (10, 11) der jeweiligen Stirnseite (8, 9) die jeweils axial benachbart zugeordnete Nutflanke (25, 26) des Einbauraums (21) zur Abdichtung der statisch beanspruchten Dichtkanten (3, 4) dichtend anliegend berührt.

4. Dichtungs- oder Abstreiferanordnung nach einem der Ansprüche 1 bis 3, **dadurch gekennzeichnet, dass** die Dicht- oder Abstreiflippe (6) dynamisch oder statisch beansprucht ist.

5. Dichtungs- oder Abstreiferanordnung nach einem der Ansprüche 1 bis 3, **dadurch gekennzeichnet, dass** die Dichtwulste (10, 11) auf ihren einander axial abgewandten Seiten jeweils eine Begrenzungsfläche aufweisen und dass die Begrenzungsflächen in radialer Richtung plan oder ballig ausgebildet sind.

6. Dichtungs- oder Abstreiferanordnung nach einem der Ansprüche 1 bis 3, **dadurch gekennzeichnet, dass** die Vertiefung (5) im Wesentlichen V-förmig ausgebildet ist.

7. Dichtungs- oder Abstreiferanordnung nach einem der Ansprüche 1 bis 3, **dadurch gekennzeichnet, dass** die Dicht- oder Abstreiflippe (6) im Wesentlichen V-förmig ausgebildet ist.

8. Dichtungs- oder Abstreiferanordnung nach einem der Ansprüche 1 bis 7, **dadurch gekennzeichnet, dass** dieser axial mittig eine gedachte Radialebene (12) aufweist und symmetrisch zu der gedachten Radialebene (12) ausgebildet ist.

9. Dichtungs- oder Abstreiferanordnung nach einem der Ansprüche 1 bis 8, **dadurch gekennzeichnet, dass** die Dicht- oder Abstreiflippe (6) eine Ausdehnung (13) in axialer Richtung (7) aufweist, die sich von der einen Stirnseite (8) zur anderen Stirnseite (9) erstreckt.

10. Dichtungs- oder Abstreiferanordnung nach einem der Ansprüche 1 bis 9, **dadurch gekennzeichnet, dass** die Dicht- oder Abstreiflippe (6) eine Oberfläche (14) umfasst, die eine in axialer Richtung (7) wellenförmige Oberflächenprofilierung (15) aufweist.

11. Dichtungs- oder Abstreiferanordnung nach Anspruch 10, **dadurch gekennzeichnet, dass** die Oberflächenprofilierung (15) dynamisch oder statisch beanspruchte Dicht- und/oder Abstreifkanten (16) umfasst.

12. Dichtungs- oder Abstreiferanordnung nach Anspruch 11, **dadurch gekennzeichnet, dass** zwischen axial benachbart zueinander angeordneten Dicht- und/oder Abstreifkanten (16) Schmiermitteltaschen (17) angeordnet sind.

13. Dichtungs- oder Abstreiferanordnung nach einem der Ansprüche 1 bis 12, **dadurch gekennzeichnet, dass** dieser einstückig und materialeinheitlich ausgebildet ist.

## Claims

1. Seal or wiper arrangement, comprising a sealing or wiper ring which comprises, on one side in the radial direction (1), two statically loaded sealing edges (3, 4) which are arranged adjacently with respect to one another at an axial spacing (2) and a depression (5) which is arranged in the axial spacing (2), and, on the other side in the radial direction (1), at least one sealing or wiper lip (6) and, on both sides in the axial direction (7), sealing beads (10, 11) which are arranged on the end sides (8, 9) and are of annularly self-contained configuration, and a first machine element (20) which comprises an installation space (21) of groove-shaped configuration for the sealing or wiper ring, the sealing or wiper ring being arranged in the installation space (21) and making contact by way of its sealing or wiper lip (6) with a second machine element (22) to be sealed, so as to bear against it under elastic prestress, the two machine elements (20, 22) being assigned to one another substantially concentrically, and the sealing or wiper ring being prestressed elastically in the radial (1) and axial direction (7) during its use as intended, **characterized in that** the installation space (21) has a groove bottom (23) which is of arcuate configuration in the axial direction (7) and **in that** the sealing or wiper ring is arranged in the installation space (21) such that it is self-centring at least in the axial direction (7).

2. Seal or wiper arrangement according to Claim 1, **characterized in that** the groove bottom (23) and the depression (5) delimit an expansion space (24) for receiving material of the sealing or wiper ring which is displaced as a result of elasticity.

3. Seal or wiper arrangement according to one of Claims 1 and 2, **characterized in that**, on the end side on both sides of the sealing or wiper ring, only the respective sealing bead (10, 11) of the respective end side (8, 9) is in sealingly bearing contact with the respectively axially adjacently associated groove flank (25, 26) of the installation space (21) in order to seal the statically loaded sealing edges (3, 4).

4. Seal or wiper arrangement according to one of Claims 1 to 3, **characterized in that** the sealing or wiper lip (6) is loaded dynamically or statically.

5. Seal or wiper arrangement according to one of Claims 1 to 3, **characterized in that** the sealing beads (10, 11) have in each case one bounding face on their sides which face away axially from one another, and **in that** the bounding faces are of planar or crowned configuration in the radial direction.

6. Seal or wiper arrangement according to one of Claims 1 to 3, **characterized in that** the depression (5) is of substantially V-shaped configuration.

7. Seal or wiper arrangement according to one of Claims 1 to 3, **characterized in that** the sealing or wiper lip (6) is of substantially V-shaped configuration.

8. Seal or wiper arrangement according to one of Claims 1 to 7, **characterized in that** it has an imaginary radial plane (12) axially centrally and is configured symmetrically with respect to the imaginary radial plane (12).

9. Seal or wiper arrangement according to one of Claims 1 to 8, **characterized in that** the sealing or wiper lip (6) has an extent (13) in the axial direction (7) which extends from one end side (8) to the other end side (9).

10. Seal or wiper arrangement according to one of Claims 1 to 9, **characterized in that** the sealing or wiper lip (6) comprises a surface (14) which has a surface profiling (15) which undulates in the axial direction (7).

11. Seal or wiper arrangement according to Claim 10, **characterized in that** the surface profiling (15) comprises dynamically or statically loaded sealing and/or wiper edges (16).

12. Seal or wiper arrangement according to Claim 11, **characterized in that** lubricant pockets (17) are arranged between sealing and/or wiper edges (16) which are arranged axially adjacently with respect to one another.

13. Seal or wiper arrangement according to one of Claims 1 to 12, **characterized in that** it is configured in one piece and from the same material.

## Revendications

1. Dispositif d'étanchéité ou de raclage, comprenant une bague d'étanchéité ou de raclage, qui comprend en direction radiale (1) d'une part deux arêtes d'étanchéité (3, 4) disposées à proximité l'une de l'autre avec une distance axiale (2) et sollicitées de façon statique et un creux (5) disposé dans la distance axiale (2) ainsi qu'en direction radiale (1) d'autre part au moins une lèvre d'étanchéité ou de raclage (6) et en direction axiale (7) des bourrelets d'étanchéité (10, 11) disposés de part et d'autre sur les côtés frontaux (8, 9) et réalisés de forme annulaire en étant fermés sur eux-mêmes et un premier élément de machine (20), qui comprend un espace de montage réalisé en forme de rainure (21) pour la bague d'étanchéité ou de raclage, dans lequel la bague d'étanchéité ou de raclage est disposée dans l'espace de montage (21) et touche avec appui, avec sa lèvre d'étanchéité ou de raclage (6) et sous précontrainte élastique, un deuxième élément de machine (22) à rendre étanche, dans lequel les deux éléments de machine (20, 22) sont associés l'un à l'autre de façon essentiellement concentrique et dans lequel la bague d'étanchéité ou de raclage est précontrainte élastiquement en direction radiale (1) et axiale (7) pendant son utilisation conforme aux normes, **caractérisé en ce que** l'espace de montage (21) présente un fond de rainure (23), qui est en forme d'arc en direction axiale (7) et **en ce que** la bague d'étanchéité ou de raclage est disposée de façon autocentrée au moins en direction axiale (7) dans l'espace de montage (21).

2. Dispositif d'étanchéité ou de raclage selon la revendication 1, **caractérisé en ce que** le fond de rainure (23) et le creux (5) limitent une chambre d'expansion (24) destinée à contenir du matériau de la bague d'étanchéité ou de raclage repoussé en raison de son élasticité.

3. Dispositif d'étanchéité ou de raclage selon une des revendications 1 ou 2, **caractérisé en ce que** frontalement de part et d'autre de la bague d'étanchéité ou de raclage, seul le bourrelet d'étanchéité respectif (10, 11) du côté frontal respectif (8, 9) touche avec appui étanche le flanc de rainure respectivement associé de façon adjacente axialement (25, 26) de l'espace de montage (21) pour l'étanchéité des arêtes d'étanchéité sollicitées de façon statique (3, 4).

4. Dispositif d'étanchéité ou de raclage selon l'une quelconque des revendications 1 à 3, **caractérisé en ce que** la lèvre d'étanchéité ou de raclage (6) est sollicitée de façon dynamique ou statique.

5. Dispositif d'étanchéité ou de raclage selon l'une quelconque des revendications 1 à 3, **caractérisé en ce que** les bourrelets d'étanchéité (10, 11) présentent sur leurs côtés axialement détournés l'un de l'autre respectivement une face de limitation et **en ce que** les faces de limitation sont de forme plane ou bombée en direction radiale.

6. Dispositif d'étanchéité ou de raclage selon l'une quelconque des revendications 1 à 3, **caractérisé en ce que** le creux (5) est essentiellement en forme de V.

7. Dispositif d'étanchéité ou de raclage selon l'une quelconque des revendications 1 à 3, **caractérisé en ce que** la lèvre d'étanchéité ou de raclage (6) est essentiellement en forme de V.

8. Dispositif d'étanchéité ou de raclage selon l'une quelconque des revendications 1 à 7, **caractérisé en ce qu'**il présente axialement au milieu un plan radial virtuel (12) et est symétrique par rapport au plan radial virtuel (12).

9. Dispositif d'étanchéité ou de raclage selon l'une quelconque des revendications 1 à 8, **caractérisé en ce que** la lèvre d'étanchéité ou de raclage (6) présente en direction axiale (7) une extension (13) qui s'étend d'un côté frontal (8) à l'autre côté frontal (9).

10. Dispositif d'étanchéité ou de raclage selon l'une quelconque des revendications 1 à 9, **caractérisé en ce que** la lèvre d'étanchéité ou de raclage (6) comprend une surface (14), qui présente un profilage de surface (15) de forme ondulée en direction axiale (7).

11. Dispositif d'étanchéité ou de raclage selon la revendication 10, **caractérisé en ce que** le profilage de surface (15) comprend des arêtes d'étanchéité ou de raclage (16) sollicitées de façon dynamique ou statique.

12. Dispositif d'étanchéité ou de raclage selon la revendication 11, **caractérisé en ce que** des poches de lubrifiant (17) sont disposées entre les arêtes d'étanchéité ou de raclage (16) disposées axialement de façon adjacente l'une à l'autre.

13. Dispositif d'étanchéité ou de raclage selon l'une quelconque des revendications 1 à 12, **caractérisé en ce qu'**il est réalisé en une seule pièce et en une seule matière.
